# EUROPÄISCHE PATENTSCHRIFT

(11) **EP 2 585 731 B1**
(45) Veröffentlichungstag und Bekanntmachung des Hinweises auf die Patenterteilung: **21.10.2015**
(21) Anmeldenummer: 11708729.6
(22) Anmeldetag: 10.03.2011
(51) Int. Cl.: F16D 65/14, F16D 55/226, F16D 51/00

(54) **PNEUMATISCHE RADBREMSE FÜR EIN FAHRZEUG**
PNEUMATIC WHEEL BRAKE FOR A VEHICLE
FREIN DE ROUE PNEUMATIQUE POUR UN VÉHICULE

(30) Priorität: 26.06.2010 DE 102010025232
(43) Veröffentlichungstag der Anmeldung: 01.05.2013
(73) Patentinhaber: WABCO GmbH, 30453 Hannover (DE)
(72) Erfinder: BEIER, Peter, 31515 Wunstorf (DE); JANTZ, Olaf, 30455 Hannover (DE)
(74) Vertreter: Lauerwald, Jörg
(86) Internationale Anmeldenummer: PCT/EP2011/001174
(87) Internationale Veröffentlichungsnummer: WO 2011/160736

(56) Entgegenhaltungen:
- EP-A2- 1 384 913
- WO-A1-2007/051809
- DE-A1-102005 022 404
- DE-A1-102007 043 968
- US-B2- 6 948 595

## Beschreibung

Die Erfindung betrifft eine pneumatische Radbremse für ein Fahrzeug gemäß dem Oberbegriff des Patentanspruchs 1.

Eine gattungsgemäße pneumatische Radbremse ist aus der EP 1 384 913 B1 bekannt. Dort wird vorgeschlagen, neben einer ersten Spreizeinrichtung eine zweite Spreizeinrichtung vorzusehen. Die zweite Spreizeinrichtung ist Teil einer elektrisch betätigten Zugspanneinrichtung. Hiermit kann eine Feststellbremsfunktion mit weniger Bauraumbedarf realisiert werden, insbesondere weil als pneumatischer Betätigungszylinder kein lang bauender Kombizylinder verwendet werden muss, sondern ein einfacher, kürzer bauender Bremszylinder verwendet werden kann.

Bei dem aus der EP 1 384 913 B1 hervorgehenden Prinzip einer elektrisch betätigbaren Feststellfunktion kann es nach Einlegen der Feststellbremse, das heißt nach dem Abstellen des Fahrzeuges, insbesondere bei erhitzten Bremsen einen Bedarf geben, eine in Folge des Abkühlens der Bremse auftretende Verringerung der Bremskraft der Feststellbremsfunktion durch ein Nachstellen mittels der elektrischen Zuspanneinrichtung zu kompensieren, um eine sichere Abbremsung des Fahrzeugs zu gewährleisten. Ein solches Nachstellen durch Betätigung der elektrischen Zuspanneinrichtung kann jedoch unerwünscht sein, zum Beispiel wenn elektrische Energie gespart werden soll.

Aus der DE 10 2007 043 968 A1 geht eine elektromechanische Bremsvorrichtung für Kraftfahrzeuge hervor. Aus der WO 2007/051809 A1 geht eine hydraulische Kraftfahrzeugbremse hervor.

Der Erfindung liegt daher die Aufgabe zugrunde, eine pneumatische Radbremse mit elektrisch betätigbarer Feststellbremsfunktion anzugeben, die nach dem Abstellen des Fahrzeuges ohne weiteren elektrischen Energieverbrauch eine dauerhaft sichere Abbremsung des Fahrzeuges gewährleistet.

Diese Aufgabe wird durch die in dem Anspruch 1 angegebene Erfindung gelöst. Die Unteransprüche geben vorteilhafte Weiterbildungen der Erfindung an.

Die Erfindung hat den Vorteil, dass durch das Vorsehen eines Federspeicherelements ein Nachstellen bzw. ein Nachspannen über die elektromotorisch antreibbare Stelleinrichtung bei abgestelltem Fahrzeug nicht erforderlich ist. Daher kann ein Verbrauch von elektrischer Energie bei abgestelltem Fahrzeug im Rahmen der Feststellbremsfunktion mit der Erfindung vollständig vermieden werden. Durch das Federspeicherelement erfolgt eine automatische Kompensation etwaiger Schrumpfungen in der Bremsmechanik infolge eines Abkühlens.

Ein weiterer Vorteil ist, dass als Druckluftzylinder einfach aufgebaute Betriebsbremszylinder ohne Federspeicherelement verwendet werden können, d.h. es ist kein lang bauender Kombizylinder erforderlich.

Über die elektromotorisch antreibbare Stelleinrichtung kann eine elektrisch betätigbare Feststellbremsfunktion realisiert werden. Vorteilhaft ist das Federspeicherelement von der elektromotorisch antreibbaren Stelleinrichtung kraftbeaufschlagbar. Hierdurch liegt das Federspeicherelement derart mit der elektromotorisch antreibbaren Stelleinrichtung im Kraftfluss, dass das Federspeicherelement selbst eine Zuspannkraft auf das erste Bremselement ausüben kann und zudem das Federspeicherelement von der elektromotorisch antreibbaren Stelleinrichtung auf eine bestimmte Vorspannkraft vorgespannt werden kann. Dies erlaubt eine kostengünstige und kompakte Realisierung einer elektrisch betätigbaren Feststellbremsfunktion für eine pneumatische Radbremse, zum Beispiel in Form einer elektromechanischen Handbremse (EMH).

Somit kann das erste Bremselement sowohl von der elektromotorisch antreibbaren Stelleinrichtung als auch von dem Federspeicherelement mit einer Zuspannkraft beaufschlagt werden.

Gemäß einer vorteilhaften Weiterbildung der Erfindung wird die elektromotorisch antreibbare Stelleinrichtung zum Lüftspielausgleich eingeschaltet.

Gemäß einer vorteilhaften Weiterbildung der Erfindung ist die elektromotorisch antreibbare Stelleinrichtung bei Betätigung des Bremshebels, d.h. bei Druckbeaufschlagung des Druckluftzylinders, durch die hierdurch entstehenden Kräfte nicht oder nicht in vollem Umfang beaufschlagt. Die elektromotorisch antreibbare Stelleinrichtung ist somit außerhalb des beim Zuspannen der Radbremse über den Druckluftzylinder erzeugten Hauptkraftflusses angeordnet und ist somit nicht mit den relativ hohen, beim Bremsvorgang auftretenden Zuspannkräften belastet. Da die elektromotorisch antreibbare Stelleinrichtung für die Feststellbremsfunktion und gegebenenfalls für einen Lüftspielausgleich dient, kann die elektromotorisch antreibbare Stelleinrichtung somit geringer belastbar konstruiert werden als wenn sie, wie bei der EP 1 384 913 B1 vorgeschlagen, im Hauptkraftfluss liegen würde. So kann je nach Auslegung der Bremsanlage für die Feststellbremsfunktion bei einem schweren Nutzfahrzeug üblicher Bauart beispielsweise eine Zuspannkraft von 120 kN erforderlich sein, während die bei der Betätigung der Betriebsbremse auftretende maximale Bremskraft bei etwa 230 kN liegen kann. Entsprechend der geringeren Belastbarkeit kann die elektromotorische Stelleinrichtung somit mit einfacheren und weniger hochbelastbaren Bauelementen konstruiert werden und hierdurch insgesamt kompakter und leichter ausgebildet werden.

Gemäß einer vorteilhaften Weiterbildung der Erfindung ist das Federspeicherelement bei Betätigung des Bremshebels durch die hierdurch entstehenden Kräfte nicht oder nicht in vollem Umfang beaufschlagt. Gemäß einer solchen Anordnung des Federspeicherelements liegt dieses, ebenso wie zuvor für die elektromotorisch antreibbare Stelleinrichtung ausgeführt, nicht im Hauptkraftfluss der Betriebsbremsfunktion der Radbremse. Entsprechend kann auch das Federspeicherelement auf die geringeren Belastungen, die bei der Feststellbremsfunktion auftreten, ausgelegt werden, das heißt entsprechend kleiner und leichter ausgebildet sein als wenn es im Hauptkraftfluss angeordnet wäre.

Gemäß einer vorteilhaften Weiterbildung der Erfindung ist das Federspeicherelement durch die elektromotorisch antreibbare Stelleinrichtung auf eine Vorspannkraft vorspannbar. Dies hat den Vorteil, dass die elektromotorisch antreibbare Stelleinrichtung bei Empfang eines Feststellbrems-Betätigungssignals das Federspeicherelement sozusagen "auf Vorrat" entsprechend mit einer Vorspannkraft beaufschlagen kann, so dass das Federspeicherelement nach Abstellen des Fahrzeuges in Folge einer ausreichenden Vorspannkraft selbsttätig eine sichere Abbremsung des Fahrzeugs im Rahmen der Feststellbremsfunktion bewirkt.

Gemäß einer vorteilhaften Weiterbildung der Erfindung ist das Federspeicherelement als Tellerfeder ausgebildet. Dies hat den Vorteil, dass ein kleines kompakt bauendes Bauteil als Federspeicherelement eingesetzt werden kann, so dass die für die Realisierung der Feststellbremsfunktion erforderlichen Bauteile insgesamt sehr kompakt in die Radbremse integriert werden können. Zudem wird mit der Verwendung einer Tellerfeder eine für die Nachstellung der Feststellbremsfunktion bei abgestelltem Fahrzeug günstige Weg-/Kraft-Kennlinie der Feder realisiert. Insbesondere kann bei Einstellung einer entsprechenden Vorspannkraft der im Wesentlichen horizontal verlaufende Teil der Kennlinie einer Tellerfeder ausgenutzt werden, in dem sich die von der Feder abgegebene Kraft über den Weg nicht oder nur unwesentlich verändert.

Gemäß einer vorteilhaften Weiterbildung der Erfindung ist die elektromotorisch antreibbare Stelleinrichtung über ein variables Getriebe mit der Zuspanneinrichtung gekoppelt. Das variable Getriebe kann insbesondere eine Kugelrampenanordnung aufweisen. Die Verwendung eines variablen Getriebes hat den Vorteil, dass ein variables Übersetzungsverhältnis des Getriebes über den Stellweg der elektromotorisch antreibbaren Stelleinreichung realisiert werden kann. So kann insbesondere zu Beginn der Stellbewegung der elektromotorisch antreibbaren Stelleinrichtung eine größere Übersetzung vorgesehen sein und im weiteren Verlauf eine sich verringernde Übersetzung. Hierdurch kann die verfügbare Stellkraft der elektromotorisch antreibbaren Stelleinrichtung besonders sinnvoll und effizient zum Zuspannen der Bremse im Rahmen der Feststellbremsfunktion genutzt werden, indem insbesondere bei zunehmender Zuspannkraft über das variable Getriebe das Übersetzungsverhältnis verringert wird, so dass auch mit einer mit einem relativ schwachen Elektromotor bestückten Stelleinrichtung eine hohe Zuspannkraft der Feststellbremsfunktion realisiert werden kann.

Gemäß einer vorteilhaften Weiterbildung der Erfindung ist das variable Getriebe bei Betätigung des Bremshebels durch die hierdurch entstehenden Kräfte nicht oder nicht in vollem Umfang beaufschlagt. Hierdurch ist auch das variable Getriebe nicht im Hauptkraftfluss der Betriebsbremsfunktion angeordnet, sondern von diesem Kraftfluss nicht oder nur gering beaufschlagt. Entsprechend kann auch das variable Getriebe mit weniger belastbaren Bauteilen realisiert werden und damit einfacher, kostengünstiger und leichter ausgebildet werden. Insbesondere kann im Falle einer Kugelrampenanordnung auf kleinere Kugeln zurückgegriffen werden, so dass der erforderliche Bauraum für das variable Getriebe weiter minimiert werden kann.

Gemäß einer vorteilhaften Weiterbildung der Erfindung weist das variable Getriebe in Zuspannrichtung eine degressive Wegkennlinie auf. Dies hat den Vorteil, dass in Zuspannrichtung die elektromotorisch antreibbare Stelleinrichtung zunächst mit größerer Getriebeübersetzung einen Stellweg ausgeben kann und im Verlaufe der Stellbewegung mit geringer werdender Getriebeübersetzung den Stellweg ausgeben kann. Hierdurch lassen sich insgesamt größere Maximal-Zuspannkräfte der Feststellbremsfunktion realisieren als bei einer linearen oder progressiven Wegkennlinie.

Gemäß einer vorteilhaften Weiterbildung der Erfindung ist die elektromotorisch antreibbare Stelleinrichtung mit einer schaltbaren Kupplungseinrichtung verbunden, über die die elektromotorisch antreibbare Stelleinrichtung wahlweise mit der Zuspanneinrichtung koppelbar oder davon trennbar ist. Die schaltbare Kupplungseinrichtung hat den Vorteil, dass die elektromotorisch antreibbare Stelleinrichtung wahlweise für verschiedene Funktionen genutzt werden kann, insbesondere für ein direktes Zuspannen der Radbremse im Rahmen der Feststellbremsfunktion, für einen Lüftspielausgleich und für ein gesondertes Vorspannen des Federspeicherelements auf eine gewünschte Vorspannkraft. In einer vorteilhaften Ausgestaltung der Erfindung ist die schaltbare Kupplungseinrichtung zwischen der elektromotorisch antreibbaren Stelleinrichtung und den für die Feststellbremsfunktion verwendeten Teilen der Zuspanneinrichtung angeordnet, das heißt die elektromotorisch antreibbare Stelleinrichtung ist permanent mit dem Federspeicherelement verbunden.

Gemäß einer vorteilhaften Weiterbildung der Erfindung ist das variable Getriebe durch die schaltbare Kupplungseinrichtung sperrbar. Dies ermöglicht es, das variable Getriebe durch die Kupplungseinrichtung zu sperren und damit bezüglich seiner Übersetzungsfunktion zu neutralisieren. In diesem Zustand wird die von der elektromotorisch antreibbaren Stelleinrichtung abgegebene Stellbewegung unmittelbar und ohne Getriebeübersetzung auf die von der elektromotorisch antreibbaren Stelleinrichtung betätigbaren Teile der Zuspanneinrichtung übertragen. Durch Entsperren des variablen Getriebes mittels der schaltbaren Kupplungseinrichtung wird dagegen die elektromotorisch antreibbare Stelleinrichtung von den Teilen der Zuspanneinrichtung entkoppelt. In diesem Zustand wird das variable Getriebe wirksam, das heißt über das variable Getriebe erfolgt eine abhängig von der Stellposition festgelegte variable Übersetzung des von der elektromotorisch antreibbaren Stelleinrichtung abgegebenen Stellwegs.

Gemäß einer vorteilhaften Weiterbildung der Erfindung weist die Radbremse zusätzlich den Druckluftzylinder auf.

Die Erfindung betrifft außerdem ein Verfahren zum Feststellen eines Fahrzeuges im Stillstand mit einer pneumatischen Radbremse der zuvor beschriebenen Art mit den Merkmalen:
a) bei Empfang eines Feststellbrems-Betätigungssignals wird die elektromotorisch antreibbare Stelleinrichtung in Zuspannrichtung der Radbremse betätigt, wobei die elektromotorisch antreibbare Stelleinrichtung durch die Kupplungseinrichtung mit der Zuspanneinrichtung gekoppelt ist,
b) bei Erreichen einer ersten vorgegebenen Stellposition und/oder Zuspannkraft wird die elektromotorisch antreibbare Stelleinrichtung durch die Kupplungseinrichtung von der Zuspanneinrichtung getrennt, wobei die elektromotorisch antreibbare Stelleinrichtung weiter in Zuspannrichtung der Radbremse betätigt wird,
c) bei Erreichen einer zweiten vorgegebenen Stellposition und/oder Zuspannkraft wird die elektromotorisch antreibbare Stelleinrichtung abgeschaltet.

Für das Lösen der Feststellbremsfunktion wird der zuvor beschriebene Ablauf entsprechend in umgekehrter Reihenfolge durchgeführt. Es wird zunächst mit geöffneter Kupplungseinrichtung die elektromotorisch antreibbare Stelleinrichtung entgegen der Zuspannrichtung betätigt. Bei Erreichen einer vorgegebenen Stellposition und/oder Zuspannkraft wird die Kupplungseinrichtung geschlossen und die elektromotorisch antreibbare Stelleinrichtung so lange weiter entgegen der Zuspannrichtung betätigt, bis die Feststellbremsfunktion aufgehoben ist.

Die Erfindung wird nachfolgend anhand von Ausführungsbeispielen unter Verwendung von Zeichnungen näher erläutert.

Es zeigen:
Figur 1 - eine pneumatische Radbremse für ein Fahrzeug in schematischer Prinzipdarstellung und
Figur 2 - eine weitere Ausführungsform einer pneumatischen Radbremse in seitlicher Schnittdarstellung und
Figur 3 - ein vergrößerter Ausschnitt aus der Figur 2, der Einzelheiten der Kupplungseinrichtung, des variablen Getriebes und des Federspeicherelements zeigt, und
Figur 4 - die Radbremse gemäß den Figuren 2 und 3 in Schnittdarstellung in einer Ansicht von oben und
Figur 5 - die Radbremse gemäß den Figuren 2 bis 4 in perspektivischer Darstellung und
Figur 6 - den Verlauf einer Kontur eines variablen Getriebes und
Figur 7 - den Ablauf beim Feststellen eines Fahrzeuges mit einer pneumatischen Radbremse.

In den Figuren werden gleiche Bezugszeichen für einander entsprechende Elemente verwendet.

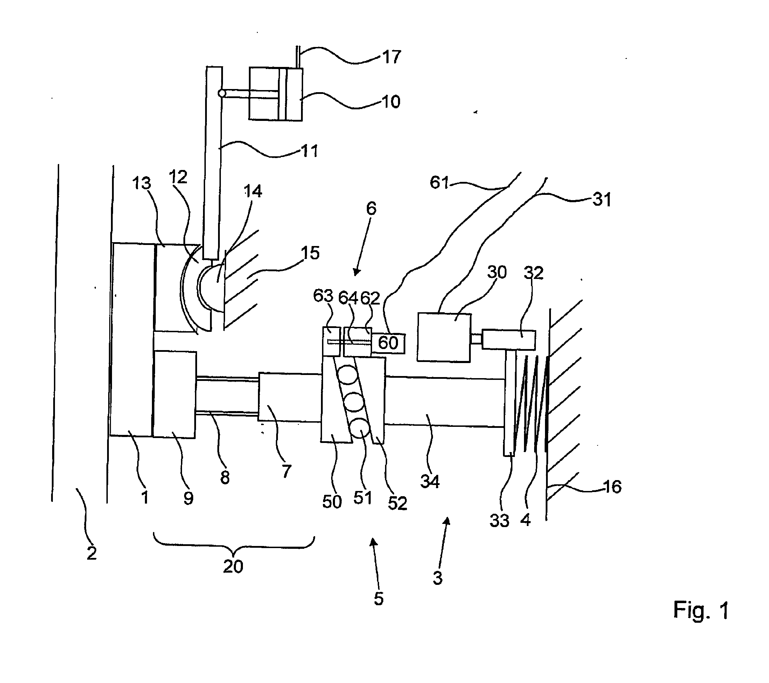

Die Figur 1 zeigt eine pneumatische Radbremse für ein Fahrzeug in stark schematisierter Darstellung. Dargestellt sind ein Druckluftzylinder 10 und eine mit dem Druckluftzylinder 10 verbundene, von dem Druckluftzylinder 10 betätigbare Zuspanneinrichtung 20. Die Zuspanneinrichtung 20 weist einen Bremshebel 11 auf, der an seinem vom Angriffspunkt des Druckluftzylinders 10 abgewandten Ende ein mit einer Betätigungskontur versehenes Betätigungselement 12 aufweist, das zum Beispiel in Form eines Exzenters oder einer Nockenwelle ausgebildet sein kann. Das Betätigungselement 12 wirkt auf ein mit einer entsprechenden entgegengesetzten Kontur ausgebildetes erstes Druckstück 13, das schließlich auf ein erstes Bremselement in Form eines Bremsbelags 1 einwirkt. Das Betätigungselement 12 ist rückwärtig über ein Lagerelement 14 an einem gehäusefesten Bauteil der Radbremse, zum Beispiel einem Bremsdeckel 15, abgestützt.

Durch Betätigung des Druckluftzylinders 10, die durch eine Druckluftbefüllung einer Druckluftkammer über eine Druckluftleitung 17 hervorgerufen wird, übt der Druckluftzylinder 10 über eine Kolbenstange eine Betätigungskraft auf den Bremshebel 11 aus. Hierdurch wird der Bremshebel 11 in Zuspannrichtung betätigt. Über das Betätigungselement 12 und das Druckstück 13 wird eine Zuspannkraft auf den Bremsbelag 1 ausgeübt. Hierdurch wird der Bremsbelag 1 gegen ein zweites Bremselement in Form einer Bremsscheibe 2 gepresst. Alternativ kann die Radbremse auch als Trommelbremse ausgebildet sein. In diesem Fall ist das zweite Bremselement als Bremstrommel ausgebildet.

Die Zuspanneinrichtung weist ferner eine Spindelmutter 7, eine in der Spindelmutter drehbare Gewindespindel 8 und ein mit der Gewindespindel 8 verbundenes zweites Druckstück 9 auf. Das zweite Druckstück 9 steht wie das erste Druckstück 13 mit dem Bremsbelag 1 in Kontakt und kann, bei entsprechender Verdrehung der Spindelmutter 7 gegenüber der Gewindespindel 8, eine Zuspannkraft auf den Bremsbelag 1 ausüben.

Die beschriebenen Teile 7, 8, 9 der Zuspanneinrichtung 20 sind modernen Radbremsen üblicherweise mit dem ersten Druckstück 13 integriert ausgebildet. Hierbei dienen die Spindelmutter 7 und die Gewindespindel 8 zum bremsbelagverschleiß-bedingten Längenausgleich über eine integrierte mechanische Nachstelleinrichtung. Hierbei ist vorteilhaft das erste Druckstück 13 mit dem zweiten Druckstück 9 als einheitliches Bauteil integriert ausgebildet. Zudem sind die Gewindespindel 8 bzw. die Spindelmutter 7 durch eine Öffnung des Betätigungselements 12 hindurchgeführt. Zur übersichtlicheren Darstellung ist diese Anordnung in der Figur 1 aber nebeneinander dargestellt.

Die Spindelmutter 7 ist drehfest mit einem Abtriebselement 50 eines in Form einer Kugelrampenanordnung ausgebildeten variablen Getriebes 5 gekoppelt. Das variable Getriebes 5 weist neben dem Abtriebselement 50 ein Antriebselement 52 sowie zwischen dem Antriebs- und dem Abtriebselement angeordnete Kugeln 51 auf. Vorteilhaft sind drei gleichmäßig über den Umfang des Antriebs- beziehungsweise des Abtriebselements 50, 52 angeordnete Kugeln 51 vorgesehen. Hierdurch kann auf einfache Weise eine statisch bestimmte Kraftübertragung von dem Antriebselement 52 auf das Abtriebselement 50 realisiert werden.

An dem variablen Getriebe 5 ist eine schaltbare Kupplungseinrichtung 6 befestigt. Die schaltbare Kupplungseinrichtung 6 weist ein mit dem Abtriebselement 50 verbundenes Abtriebskupplungsteil 63 und ein mit dem Antriebselement 52 verbundenes Antriebskupplungsteil 62 auf. Zur Realisierung einer elektrisch betätigbaren Schaltfunktion weist die Kupplungseinrichtung 6 einen zum Beispiel an dem Antriebskupplungsteil 62 befestigten Elektromagneten 60 auf, über den ein Kupplungsstift 64 einfahrbar und ausfahrbar ist. Bei ausgefahrenem Kupplungsstift 64 ist das Antriebskupplungsteil 62 drehfest mit dem Abtriebskupplungsteil 63 verbunden. Hierdurch ist das variable Getriebe 5 gesperrt, das heißt das Antriebselement 52 ist drehfest mit dem Abtriebselement 50 verbunden. Der Elektromagnet 60 ist über eine elektrische Leitung 61 betätigbar.

Mit dem Antriebselement 52 des variablen Getriebes 5 ist eine Übertragungswelle 34 einer elektromotorisch antreibbaren Stelleinrichtung 3 drehfest verbunden. Die Übertragungswelle 34 ist an ihrem dem Antriebselement 52 abgewandten Ende mit einem Zahnrad 33 drehfest verbunden. Das Zahnrad 33 ist in Kontakt mit einem Ritzel 32. Das Ritzel 32 ist mit einem Elektromotor 30 verbunden. Der Elektromotor 30 ist über eine elektrische Leitung 31 betätigbar. Das Ritzel 32 und das Zahnrad 33 bilden ein Getriebe. Hierbei ist das Ritzel 32 relativ lang ausgebildet, um beim Betrieb der elektromotorisch antreibbaren Stelleinrichtung 3 auftretende Positionsänderungen des Zahnrads 33 in Längsrichtung der Übertragungswelle 34 aufnehmen zu können.

Auf der der Übertragungswelle 34 abgewandten Seite des Zahnrads 33 ist ein Federspeicherelement 4 angeordnet, das, gegebenenfalls entkoppelt über ein Lager, zwischen dem Zahnrad 33 und einem gehäusefesten Anschlag 16 der Radbremse eingespannt ist.

Wie erkennbar ist, sind bei der Anordnung gemäß Figur 1 die Kupplungseinrichtung 6, das variable Getriebe 5, die elektromotorisch antreibbare Stelleinrichtung 3 sowie das Federspeicherelement 4 außerhalb des Kraftflusses der von dem Druckluftzylinder 10 beaufschlagbaren Teile der Zuspanneinrichtung angeordnet, so dass die hierbei erzeugten Kräfte nicht auf die Kupplungseinrichtung 6, das variable Getriebe 5, die elektromotorisch antreibbare Stelleinrichtung 3 und das Federspeicherelement 4 einwirken.

Zum Aktivieren der Feststellbremsfunktion wird die Radbremse gemäß Figur 1 wie folgt betätigt.

Zunächst wird bei geschlossener Kupplungseinrichtung 6, das heißt bei ausgefahrenem Kupplungsstift 64, der Elektromotor 30 in Zuspannrichtung betätigt. Die hierbei über die Übertragungswelle 34 übertragene Drehbewegung wird durch das gesperrte variable Getriebe 5 direkt auf die Spindelmutter 7 übertragen. Hierdurch fährt die Gewindespindel 8 und damit das zweite Druckstück 9 gegen den Bremsbelag 1. Der Elektromotor 30 wird in diesem Betriebszustand so lange betrieben, bis die von ihm erzeugbare Zuspannkraft zumindest annähernd erreicht ist. Sodann wird die Kupplungseinrichtung 6 geöffnet, das heißt der Kupplungsstift 64 wird eingefahren. Hierzu wird gegebenenfalls der Elektromotor 30 kurz angehalten oder leicht entgegen der Zuspannrichtung betätigt, um die Kupplungseinrichtung 6 zu entlasten. Hierdurch wird das Antriebselement 52 von dem Abtriebselement 50 entkoppelt, so dass sich beide Teile gegeneinander bewegen können. Sodann wird der Elektromotor 30 wieder in Zuspannrichtung betätigt. Hierdurch wird die Übertragungswelle 34 sowie das Zahnrad 33 in Folge einer Längenveränderung der Kugelrampenanordnung 5 nach rechts bewegt. Hierdurch wird das Federspeicherelement 4 weiter gespannt. Zugleich wird die über das weitere Druckstück 9 auf den Bremsbelag 1 ausgeübte Zuspannkraft weiter erhöht. Bei Erreichen einer ausreichenden Vorspannung des Federspeicherelements 4 bzw. einer ausreichenden Zuspannkraft wird der Elektromotor 30 abgeschaltet.

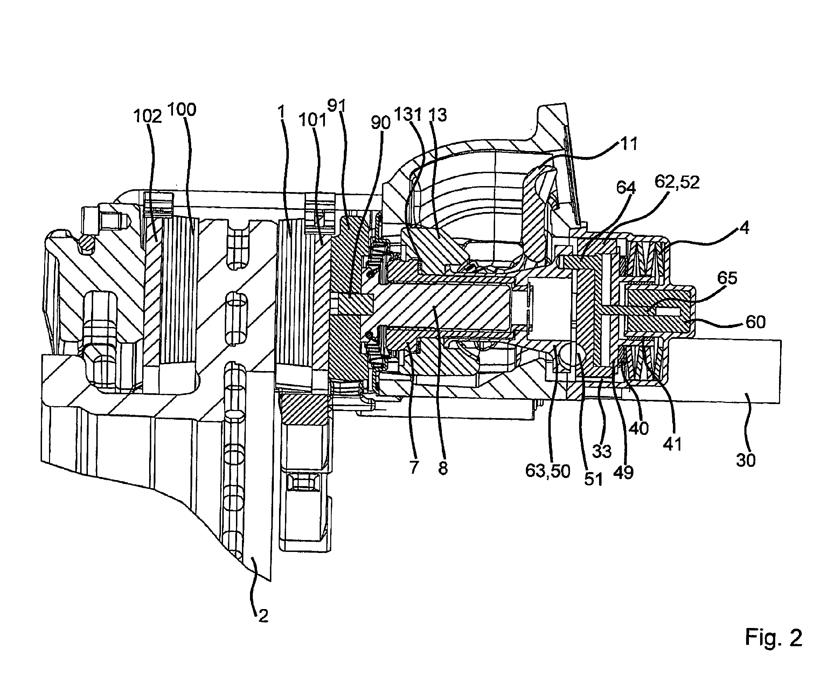

Die Figur 2 zeigt eine weitere Ausführungsform einer pneumatischen Radbremse für ein Fahrzeug, bei der die anhand der Figur 1 beschriebenen Elemente, insbesondere der Zuspanneinrichtung, konstruktiv miteinander integriert ausgeführt sind. Erkennbar ist der Bremshebel 11, das erste Druckstück 13, die Spindelmutter 7 und die Gewindespindel 8. Wie erkennbar ist, sind die Spindelmutter 7 und die Gewindespindel 8 in einer Durchgangsöffnung des ersten Druckstücks 13 angeordnet. Das erste Druckstück 13 ist über ein Lager 131 gegenüber der Spindelmutter 7 gelagert.

Die Gewindespindel 8 ist mit einer Druckplatte 91 gekoppelt, über die die Zuspannkraft letztendlich über eine Rückenplatte 101 des Bremsbelags 1 auf die Bremsscheibe 2 übertragen wird. Zur Aufnahme der Reaktionskraft ist auf der gegenüberliegenden Seite der Bremsscheibe 2 ein weiterer Bremsbelag 100 mit einer Rückenplatte 102 angeordnet.

Die Gewindespindel 8 ist über ein Verbindungselement 90 drehfest mit der Druckplatte 91 verbunden. Über das Verbindungselement 90 wird ein unerwünschtes Verdrehen der Gewindespindel 8 gegenüber der Druckplatte 91 verhindert, so dass die erwünschte Relativverdrehung zwischen der Gewindespindel 8 und der Spindelmutter 7 sichergestellt wird.

Erkennbar sind ferner das als ein Bauteil mit dem Abtriebskupplungsteil 63 ausgeführte Abtriebselement 50 des variablen Getriebes 5, eine Kugel 51 der Kugelrampenanordnung des variablen Getriebes 5, der ausfahrbare Stift 64 sowie das als ein Bauteil mit dem Antriebskupplungsteil 62 ausgeführte Antriebselement 52 des variablen Getriebes 5. Zusätzlich ist auch das Zahnrad 33 mit dem Antriebselement 52 integriert ausgebildet, und zwar in Form einer auf der Außenseite des Antriebselements 52 vorgesehenen Außenverzahnung. Infolge der Integration des Zahnrads 33 mit dem Antriebselement 52 entfällt die Übertragungswelle 34 als separates Bauelement. Das Antriebselement 52 ist über einen Lagerdeckel 49 mit einem Lager 40 gegenüber dem Federspeicherelement 4 in Axialrichtung gelagert. Zudem ist das Antriebselement 52 über den Lagerdeckel 49 mit einem Lager 41 gegenüber dem Gehäuse des Elektromagneten 60 in Radialrichtung gelagert. Bezüglich des Elektromagneten 60 ist ein Anker 65 dargestellt, der bei Betätigung des Elektromagneten in diesen eintaucht und dabei den Stift 64 mitnimmt. Ferner ist der Elektromotor 30 dargestellt.

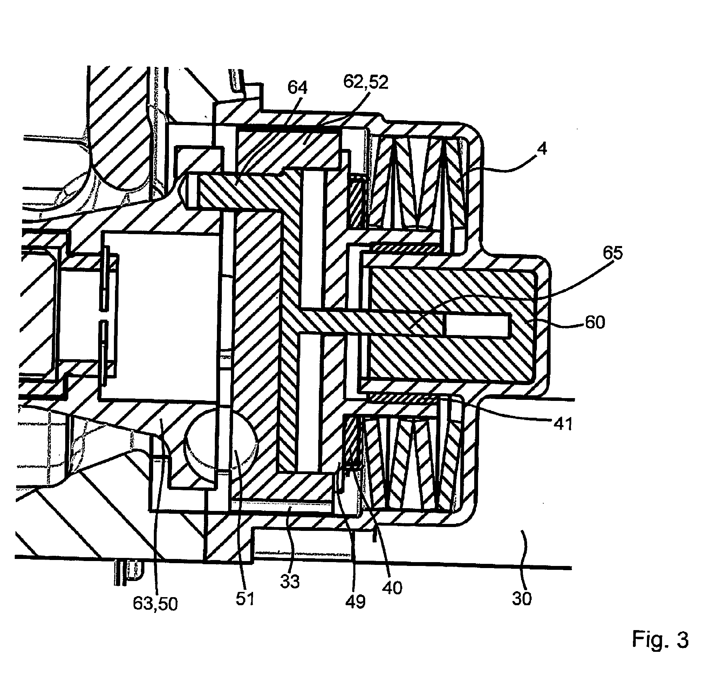

Die Figur 3 zeigt in vergrößerter Darstellung den rechten Teil der in Figur 2 dargestellten Radbremse mit den zuvor erläuterten Elementen.

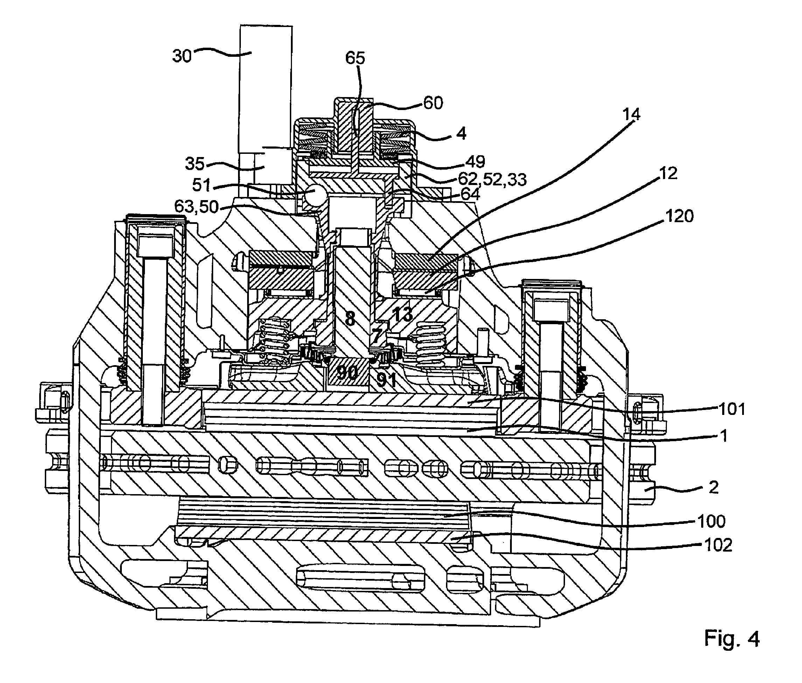

Die Figur 4 zeigt die Radbremse gemäß den Figuren 2 und 3 in einer Ansicht von oben. Erkennbar sind wiederum die anhand der Figuren 2 und 3 erläuterten Elemente, die in der Figur 4 mit gleichen Bezugszeichen versehen sind.

Zusätzlich ist in der Figur 4 eine Getriebeanordnung 35 dargestellt, die mit dem Elektromotor 30 und dem Zahnrad 33 verbunden ist. Die Getriebeanordnung 35 kann als mehrstufiges Zahnradgetriebe ausgebildet sein und insbesondere das Ritzel 32 aufweisen. Erkennbar ist in der Figur 4 zudem das Betätigungselement 12, das Lagerelement 14 sowie ein zur Reibungsminimierung zwischen dem Betätigungselement 12 und dem ersten Druckstück 13 angeordnetes Lager 120.

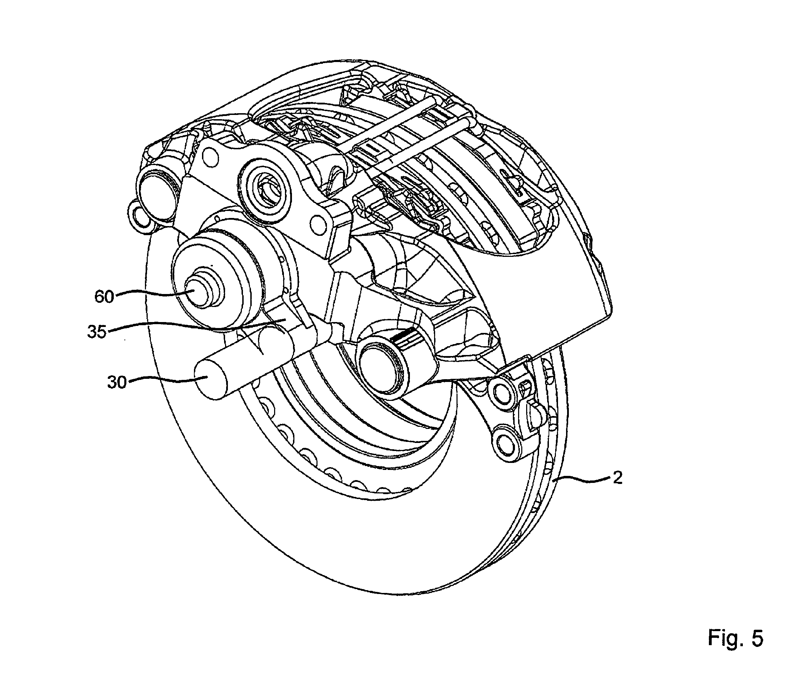

Die Figur 5 zeigt die Radbremse gemäß den Figuren 2 bis 4 in perspektivischer Darstellung.

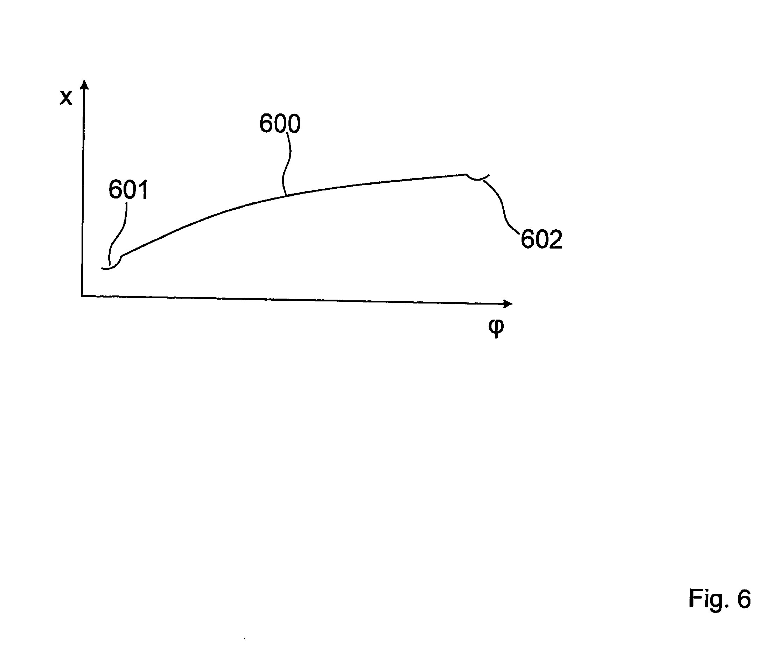

Die Figur 6 zeigt einen vorteilhaften Verlauf der Wegkennlinie des variablen Getriebes 5. Dargestellt ist der von dem Getriebe 5 in Längsrichtung der Übertragungswelle 34 abgegebene Weg x über den Drehwinkel ϕ der Übertragungswelle 34. Wie erkennbar ist, weist die Kennlinie eine degressive Charakteristik auf, das heißt sie ist zu größeren Werten von ϕ hin abfallend. Die in Figur 6 dargestellte Kennlinie entspricht zugleich einer Profilkontur 600 der Kugelrampenanordnung, zum Beispiel einer an dem Antriebselement 52 statt der in Figur 1 dargestellten linearen Kontur vorgesehenen degressiven Kontur. In diesem Fall sind an der Kontur 600 zu Beginn und zum Ende hin Rastvertiefungen 601, 602 vorgesehen, in denen die Kugeln 51 einrasten können. Hierdurch wird die elektromotorisch antreibbare Stelleinrichtung 3 in den Endpositionen der Kontur 600 entlastet.

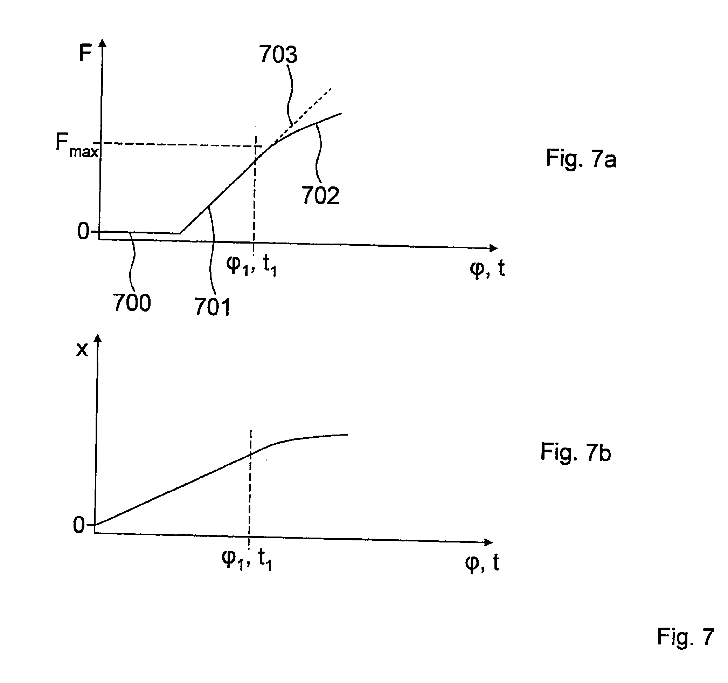

Die Figur 7 zeigt in Fig. 7a einen Verlauf der Zuspannkraft F über den Drehwinkel ϕ der Übertragungswelle 34. In Fig. 7b wird der Verlauf des abgegebenen Stellwegs x in Zuspannrichtung dargestellt. Das Diagramm weist im Prinzip die gleiche Charakteristik auf für die Betätigungsdauer t des Elektromotors. Daher sind diese Größen in Figur 7 alternativ angegeben.

Ausgehend von einem Anfangswert 0 wird der Elektromotor 30 betätigt. In einem ersten Winkel- oder Zeitabschnitt 700 wird zunächst keine Zuspannkraft erzeugt, sondern ein eventuelles Lüftspiel überwunden. Nach Überwindung des Lüftspiels wird in einem Zeitabschnitt 701 eine zum Beispiel linear ansteigende Zuspannkraft erzeugt. Zu einem Zeitpunkt t₁ bzw. bei einem Stellwinkel ϕ₁ wird die Kupplungseinrichtung 6 geöffnet. Hierdurch wird die Übertragungsfunktion des variablen Getriebes 5 aktiviert. Eine Verdrehung der Gewindespindel 8 gegenüber der Spindelmutter 7 erfolgt dann im Wesentlichen nicht mehr. Das Öffnen der Kupplungseinrichtung 6 erfolgt zu einem Zeitpunkt, bevor die von dem Elektromotor 30 maximal abgebbare Stellkraft Fₘₐₓ erreicht wird, das heißt bevor der Elektromotor 30 blockiert. Der Elektromotor 30 wird nach Öffnen der Kupplungseinrichtung 6 weiter betätigt. In Folge der Übersetzung des variablen Getriebes 5 erfolgt der Kraftanstieg in einem Zeitraum 702 mit verringerter Steigung, so dass eine weitere Erhöhung der Zuspannkraft F möglich ist. Der Wert Fₘₐₓ gibt an, bis zu welchen Zuspannkraftwert der Elektromotor bei geschlossener Kupplungseinrichtung 6 zuspannen könnte. Die Linie 703 gibt den theoretischen weiteren Verlauf der Linie 701 bei geschlossen bleibender Kupplungseinrichtung 6 an.

## Patentansprüche

1. Pneumatische Radbremse für ein Fahrzeug, wobei die Radbremse wenigstens einen durch einen Druckluftzylinder (10) betätigbaren Bremshebel (11) und eine durch den Bremshebel (11) betätigbare Zuspanneinrichtung (20) aufweist, über die bei Betätigung des Bremshebels (11) ein erstes Bremselement (1) gegen ein zweites Bremselement (2) pressbar ist, und die Radbremse eine elektromotorisch antreibbare Stelleinrichtung (3) aufweist, über die zumindest Teile (7, 8, 9) der Zuspanneinrichtung (20) zumindest bei nicht betätigtem Bremshebel (11) kraftbeaufschlagbar sind und hierdurch das erste Bremselement (1) gegen das zweite Bremselement (2) pressbar ist, **dadurch gekennzeichnet, dass** die Radbremse ein Federspeicherelement (4) aufweist, das außerhalb des Druckluftzylinders (10) angeordnet ist, wobei das Federspeicherelement (4) von der elektromotorisch antreibbaren Stelleinrichtung (3) kraftbeaufschlagbar ist und durch das Federspeicherelement (4) zumindest Teile (7, 8, 9) der Zuspanneinrichtung (20) zumindest bei nicht betätigtem Bremshebel (11) kraftbeaufschlagbar sind und hierdurch das erste Bremselement (1) gegen das zweite Bremselement (2) pressbar ist.

2. Pneumatische Radbremse nach Anspruch 1, **dadurch gekennzeichnet, dass** die elektromotorisch antreibbare Stelleinrichtung (3) bei Betätigung des Bremshebels (11) durch die hierdurch entstehenden Kräfte nicht oder nicht in vollem Umfang beaufschlagt ist.

3. Pneumatische Radbremse nach Anspruch 2, **dadurch gekennzeichnet, dass** das Federspeicherelement (4) bei Betätigung des Bremshebels (11) durch die hierdurch entstehenden Kräfte nicht oder nicht in vollem Umfang beaufschlagbar ist.

4. Pneumatische Radbremse nach Anspruch 2 oder 3, **dadurch gekennzeichnet, dass** das Federspeicherelement (4) durch die elektromotorisch antreibbare Stelleinrichtung (3) auf eine Vorspannkraft vorspannbar ist.

5. Pneumatische Radbremse nach einem der Ansprüche 2 bis 4, **dadurch gekennzeichnet, dass** das Federspeicherelement (4) als Tellerfeder ausgebildet ist.

6. Pneumatische Radbremse nach einem der vorhergehenden Ansprüche, **dadurch gekennzeichnet, dass** die elektromotorisch antreibbare Stelleinrichtung (3) über ein variables Getriebe (5), insbesondere eine Kugelrampenanordnung, mit der Zuspanneinrichtung gekoppelt ist.

7. Pneumatische Radbremse nach Anspruch 6, **dadurch gekennzeichnet, dass** das variable Getriebe (5) bei Betätigung des Bremshebels (11) durch die hierdurch entstehenden Kräfte nicht oder nicht in vollem Umfang beaufschlagt ist.

8. Pneumatische Radbremse nach Anspruch 6 oder 7, **dadurch gekennzeichnet, dass** das variable Getriebe (5) in Zuspannrichtung eine degressive Wegkennlinie aufweist.

9. Pneumatische Radbremse nach einem der vorhergehenden Ansprüche, **dadurch gekennzeichnet, dass** die elektromotorisch antreibbare Stelleinrichtung (3) mit einer schaltbaren Kupplungseinrichtung (6) verbunden ist, über die die elektromotorisch antreibbare Stelleinrichtung (3) wahlweise mit der Zuspanneinrichtung (20) koppelbar oder davon trennbar ist.

10. Pneumatische Radbremse nach Anspruch 9, **dadurch gekennzeichnet, dass** das variable Getriebe (5) durch die schaltbare Kupplungseinrichtung (6) sperrbar ist.

11. Pneumatische Radbremse nach einem der vorhergehenden Ansprüche, **dadurch gekennzeichnet, dass** die Radbremse den Druckluftzylinder (10) aufweist.

12. Verfahren zum Feststellen eines Fahrzeuges im Stillstand mit einer pneumatischen Radbremse nach einem der Ansprüche 9 oder 10 mit folgenden Merkmalen:
a) bei Empfang eines Feststellbrems-Betätigungssignals wird die elektromotorisch antreibbare Stelleinrichtung (3) in Zuspannrichtung der Radbremse betätigt, wobei die elektromotorisch antreibbare Stelleinrichtung (3) durch die Kupplungseinrichtung (6) mit der Zuspanneinrichtung (20) gekoppelt ist,
b) bei Erreichen einer ersten vorgegebenen Stellposition und/oder Zuspannkraft wird die elektromotorisch antreibbare Stelleinrichtung (3) durch die Kupplungseinrichtung (6) von der Zuspanneinrichtung (20) getrennt, wobei die elektromotorisch antreibbare Stelleinrichtung (3) weiter in Zuspannrichtung der Radbremse betätigt wird,
c) bei Erreichen einer zweiten vorgegebenen Stellposition und/oder Zuspannkraft wird die elektromotorisch antreibbare Stelleinrichtung (3) abgeschaltet.

## Claims

1. Pneumatic wheel brake for a vehicle, wherein the wheel brake comprises at least one brake lever (11) which may be actuated by a compressed air cylinder (10) and a brake application device (20) which may be actuated by the brake lever (11), via which when actuating the brake lever (11) a first brake element (1) may be pressed against a second brake element (2), and the wheel brake comprises an actuating device (3) which may be driven by electric motor, via which at least parts (7, 8, 9) of the brake application device (20) may be subjected to force at least when the brake lever (11) is not actuated, and thereby the first brake element (1) may be pressed against the second brake element (2), **characterized in that** the wheel brake comprises a spring accumulator element (4) which is arranged outside the compressed air cylinder (10), wherein the spring accumulator element (4) may be subjected to force by the actuating device (3) which may be driven by electric motor and at least parts (7, 8, 9) of the brake application device (20) are able to be subjected to force by the spring accumulator element (4) at least when the brake lever (11) is not actuated, and as a result the first brake element (1) may be pressed against the second brake element (2).

2. Pneumatic wheel brake according to Claim 1, **characterized in that** when the brake lever (11) is actuated the actuating device (3) which may be driven by electric motor is not, or not fully, subjected to forces produced thereby.

3. Pneumatic wheel brake according to Claim 2, **characterized in that** when the brake lever (11) is actuated, the spring accumulator element (4) cannot, or cannot fully, be subjected to forces produced thereby.

4. Pneumatic wheel brake according to Claim 2 or 3, **characterized in that** the spring accumulator element (4) may be pretensioned to a pretensioning force by the actuating device (3) which may be driven by electric motor.

5. Pneumatic wheel brake according to one of Claims 2 to 4, **characterized in that** the spring accumulator element (4) is configured as a disk spring.

6. Pneumatic wheel brake according to one of the preceding claims, **characterized in that** the actuating device (3) which may be driven by electric motor is coupled via a variable gear mechanism (5), in particular a ball-ramp arrangement, to the brake application device.

7. Pneumatic wheel brake according to Claim 6, **characterized in that** when the brake lever (11) is actuated the variable gear mechanism (5) is not, or not fully, subjected to forces produced thereby.

8. Pneumatic wheel brake according to Claim 6 or 7, **characterized in that** the variable gear mechanism (5) has a degressive path characteristic curve in the direction of the brake application.

9. Pneumatic wheel brake according to one of the preceding claims, **characterized in that** the actuating device (3) which may be driven by electric motor is connected to a switchable coupling device (6), via which the actuating device (3) which may be driven by electric motor, may be selectively coupled to the brake application device (20) or disconnected therefrom.

10. Pneumatic wheel brake according to Claim 9, **characterized in that** the variable gear mechanism (5) may be locked by the switchable coupling device (6).

11. Pneumatic wheel brake according to one of the preceding claims, **characterized in that** the wheel brake comprises the compressed air cylinder (10).

12. Method for securing a vehicle in the stationary state comprising a pneumatic wheel brake according to one of Claims 9 and 10 having the following features:
a) when receiving a parking brake actuating signal, the actuating device (3) which may be driven by electric motor is actuated in the direction of the application of the wheel brake, wherein the actuating device (3) which may be driven by electric motor is coupled by the coupling device (6) to the brake application device (20),
b) when reaching a first predetermined actuating position and/or brake application force, the actuating device (3) which may be driven by electric motor is disconnected from the brake application device (20) by the coupling device (6), wherein the actuating device (3) which may be driven by electric motor is actuated further in the direction of application of the wheel brake,
c) when reaching a second predetermined actuating position and/or brake application force, the actuating device (3) which may be driven by electric motor is switched off.

## Revendications

1. Frein de roue pneumatique pour un véhicule, dans lequel le frein de roue présente au moins un levier de frein (11) actionnable grâce à un cylindre à air comprimé (10) et un dispositif d'application du frein (20) actionnable grâce au levier de frein (11), par l'intermédiaire duquel, lors de l'actionnement du levier de frein (11), un premier élément de freinage (1) peut être pressé contre un deuxième élément de freinage (2), et le frein de roue présentant un dispositif de commande (3) pouvant être entraîné par moteur électrique, par l'intermédiaire duquel au moins des parties (7, 8, 9) du dispositif d'application du frein (20) peuvent être soumises à l'application d'une force au moins en cas de levier de frein (11) non actionné et de ce fait, le premier élément de freinage (1) pouvant être pressé contre le deuxième élément de freinage (2), **caractérisé en ce que** le frein de roue présente un élément d'accumulateur à ressort (4) qui est disposé à l'extérieur du cylindre à air comprimé (10), dans lequel l'élément d'accumulateur à ressort (4) peut être soumis à l'application d'une force par le dispositif de commande (3) pouvant être entraîné par moteur électrique et grâce à l'élément d'accumulateur à ressort (4), au moins des parties (7, 8, 9) du dispositif d'application du frein (20) pouvant être soumises à l'application d'une force au moins en cas de levier de frein (11) non actionné et de ce fait, le premier élément de freinage (1) pouvant être pressé contre le deuxième élément de freinage (2).

2. Frein de roue pneumatique selon la revendication 1, **caractérisé en ce que** le dispositif de commande (3) pouvant être entraîné par moteur électrique, en cas d'actionnement du levier de frein (11), n'est pas soumis aux forces ainsi produites, ou bien n'y est pas complètement soumis.

3. Frein de roue pneumatique selon la revendication 2, **caractérisé en ce que** l'élément d'accumulateur à ressort (4), en cas d'actionnement du levier de frein (11), n'est pas soumis aux forces ainsi produites, ou bien n'y est pas complètement soumis.

4. Frein de roue pneumatique selon la revendication 2 ou 3, **caractérisé en ce que** l'élément d'accumulateur à ressort (4) peut être précontraint de l'ordre d'une force de précontrainte par le dispositif de commande (3) pouvant être entraîné par moteur électrique.

5. Frein de roue pneumatique selon l'une des revendications 2 à 4, **caractérisé en ce que** l'élément d'accumulateur à ressort (4) est réalisé en tant que rondelle-ressort.

6. Frein de roue pneumatique selon l'une des revendications précédentes, **caractérisé en ce que** le dispositif de commande (3) pouvant être entraîné par moteur électrique est couplé via une transmission variable (5), en particulier un agencement de rampe à billes, au dispositif d'application du frein.

7. Frein de roue pneumatique selon la revendication 6, **caractérisé en ce que** la transmission variable (5), en cas d'actionnement du levier de frein (11), n'est pas soumise aux forces ainsi produites ou bien n'y est pas complètement soumise.

8. Frein de roue pneumatique selon la revendication 6 ou 7, **caractérisé en ce que** la transmission variable (5) présente une caractéristique de course dégressive en direction d'application du frein.

9. Frein de roue pneumatique selon l'une des revendications précédentes, **caractérisé en ce que** le dispositif de commande (3) pouvant être entraîné par moteur électrique est relié à un dispositif de couplage commutable (6) par l'intermédiaire duquel le dispositif de commande (3) pouvant être entraîné par moteur électrique peut, au choix, être couplé au dispositif d'application du frein (20) ou en être séparé.

10. Frein de roue pneumatique selon la revendication 9, **caractérisé en ce que** la transmission variable (5) peut être verrouillée par le dispositif de couplage commutable (6).

11. Frein de roue pneumatique selon l'une des revendications précédentes, **caractérisé en ce que** le frein de roue présente le cylindre à air comprimé (10).

12. Procédé pour immobiliser un véhicule à l'arrêt avec un frein de roue pneumatique selon l'une des revendications 9 ou 10 avec les caractéristiques suivantes :
a) à réception d'un signal d'actionnement de frein de stationnement, le dispositif de commande (3) pouvant être entraîné par moteur électrique est actionné en direction d'application de frein du frein de roue, le dispositif de commande (3) pouvant être entraîné par moteur électrique étant couplé, grâce au dispositif de couplage (6), au dispositif d'application du frein (20),
b) en atteignant une première position d'immobilisation prescrite et/ou une force d'application du frein, le dispositif de commande (3) pouvant être entraîné par moteur électrique est séparé par le dispositif de couplage (6) du dispositif d'application du frein (20), le dispositif de commande (3) pouvant être entraîné par moteur électrique continuant d'être actionné en direction d'application de frein du frein de roue,
c) en atteignant une deuxième position d'immobilisation prescrite et/ou une force d'application du frein, le dispositif de commande (3) pouvant être entraîné par moteur électrique étant arrêté.
